# EUROPEAN PATENT SPECIFICATION

(11) **EP 4 232 705 B1**
(45) Date of publication and mention of the grant of the patent: **05.03.2025**
(21) Application number: 21827701.0
(22) Date of filing: 18.10.2021
(51) Int. Cl.: F03B 17/06

(54) **AN UNDERWATER POWER PLANT COMPRISING ASYMMETRIC FOILS**
UNTERWASSERKRAFTWERK MIT ASYMMETRISCHEN FLÜGELN
CENTRALE ÉLECTRIQUE SOUS-MARINE COMPRENANT DES PALES ASYMÉTRIQUES

(30) Priority: 20.10.2020 NO 20201132
(43) Date of publication of application: 30.08.2023
(73) Proprietor: Tidal Sails AS, 5527 Haugesund (NO)
(72) Inventor: BØRGESEN, Are, 5538 Haugesund (NO)
(74) Representative: Onsagers AS
(86) International application number: PCT/NO2021/050216
(87) International publication number: WO 2022/086339

(56) References cited:
- WO-A1-2016/126166
- DE-A1- 2 152 637
- GB-A- 1 515 894

## Description

The present invention relates to an underwater power plant. More specifically, the disclosure relates to an underwater power plant comprising asymmetric foils for extracting energy from water currents such as river flows and tidal currents, as defined in the introductory parts of claim 1.

### BACKGROUND

Documents useful for understanding the field of technology include WO 2013/043057 A1 which describes a self-adjusting foil suspension system in which a symmetric foil is placed in a fluid flow, typically a tidal flow, and in which the foil is rotatable around a rotational axis, and in which the foil is connected by means of an arm to a track. The arm is rotatable around a rotational axis and rotatably connected to the track around a suspension axis at a radial distance from the rotational axis, and the suspension axis is parallel to the rotational axis.

GB 2 131 491 A describes a device having a series of aerofoils mounted on one or more endless belts running around two or more fixed pivot points placed some distance apart and providing the sole support for the belts. Power can be extracted from either the motion of the belts, or the rotary motion at one or more of the pivot points. The aerofoils are symmetric (or nearly so), and placed with their chords substantially parallel to the direction of travel of the belt.

WO 2016/126166 A1 describes a plant and a method for exploiting the energy of a water current. The energy plant which is placed in the water current, includes at least one rope extending around at least two turning stations and carry at least one at least partially submerged foil which is approximately symmetrical around its chord,. The velocity and direction of flow of the water together with the moving speed and direction of the foil giving a resulting water velocity and direction acting on the foil. The method includes pivoting the foil until it has a desired angle of attack to the resulting water direction when the foil is being displaced co-currently; and pivoting the foil until it has a desired angle of attack to the resulting water direction when the foil is being displaced counter-currently, the angle of attack being the same or different co-currently and counter-currently.

Other documents useful for understanding the field of technology include EP 2685089 A, DE 2152637 A and WO 2006028454 A.

The prior art also includes US 2009096215 A1, FR 2689184 A1, FR 2474106 A1, and JP S57151074 A, which all describe underwater power plants that are arranged generally aligned with the prevailing water current.

There is therefore a need for an improved underwater power plant. The present invention aims to provide un underwater power plant that is constructed simpler and improved compared to the prior art, and that is much more effective in harvesting energy from water currents. It is an objective of the present invention to achieve this and to provide further advantages over the state of the art.

### SUMMARY

It is an object of the present invention to mitigate, alleviate or eliminate one or more of the above-identified deficiencies and disadvantages in the prior art and solve at least the above mentioned problem.

According to a first aspect of the invention, there is provided an underwater power plant for arrangement in a water current, the underwater power plant comprising the features defined in claim 1.

According to an embodiment, the upper camber side has a low pressure profile, and the lower camber side has a high pressure profile.

According to an embodiment, the at least one asymmetric foil is stiff.

According to an embodiment, the endless traction member comprises a rope or other elongated and flexible member, such as a wire, chain or belt.

According to an embodiment, the endless traction member is rotatably supported by rotatable sheaves connected to the rotatable stations.

According to an embodiment, at least one rotatable station comprises a generator and rotatable transmission means whereby the generator may generate electrical energy when the endless traction member is moving.

According to an embodiment, where the power plant further comprises a connection device for rotatably connecting the at least one asymmetric foil to the at least one endless traction member.

According to an embodiment, the foil further comprises a connection member for connecting the foil to the connection device.

According to an embodiment, a damper element is arranged to restrict rotation of the foil about an axis parallel with the span of the foil.

According to an embodiment, the damper element is a spring.

According to an embodiment, rotation of the foil is restricted by a free lateral travel sector to either side of the endless traction member.

According to an embodiment, at least one foil is configured to be released from the damper element at a first rotatable station thereby allowing the at least one foil to freely rotate about the connection member.

According to an embodiment, the at least one foil is configured to be connected to the damper element at a second rotatable station.

The present invention will become apparent from the detailed description given below. The detailed description and specific examples disclose preferred embodiments of the invention by way of illustration only. Those skilled in the art understand from guidance in the detailed description that changes and modifications may be made within the scope of the invention.

Hence, it is to be understood that the herein disclosed invention is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an" and "the" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWINGS

The above objects, as well as additional objects, features and advantages of the present invention, will be more fully appreciated by reference to the following illustrative and non-limiting detailed description of example embodiments of the present invention, when taken in conjunction with the accompanying figures.
Figure 1 shows a plan view of an embodiment of an underwater power plant arranged in a body of water.
Figure 2 shows a side view of a portion of the underwater power plant.
Figure 3 shows a sectional view of an asymmetric foil.
Figure 4 shows an enlarged view of the box "A" in figure 1, illustrating forces generated by an asymmetric foil being subjected to water currents.
Figures 5a and 5b show a perspective view and a side view of an embodiment of a foil provided with upper and lower connection devices.
Figure 6 corresponds to figure 1, but shows the underwater power plant in a configuration in which some foils have been released such that they are free to rotate about the connection member relative to the endless traction members.

### DETAILED DESCRIPTION

The present invention will now be described with reference to the accompanying drawings, in which preferred example embodiments of the invention are shown. The invention may, however, be embodied in other forms and should not be construed as limited to the herein disclosed embodiments. The disclosed embodiments are provided to fully convey the scope of the invention to the skilled person.

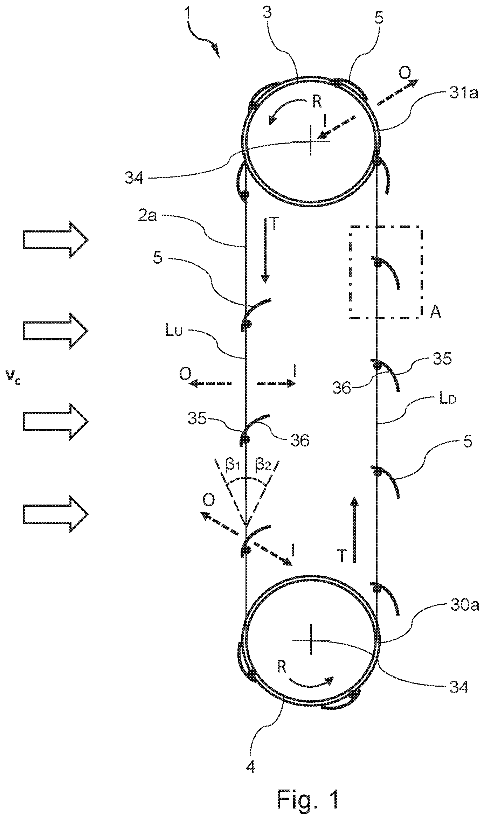

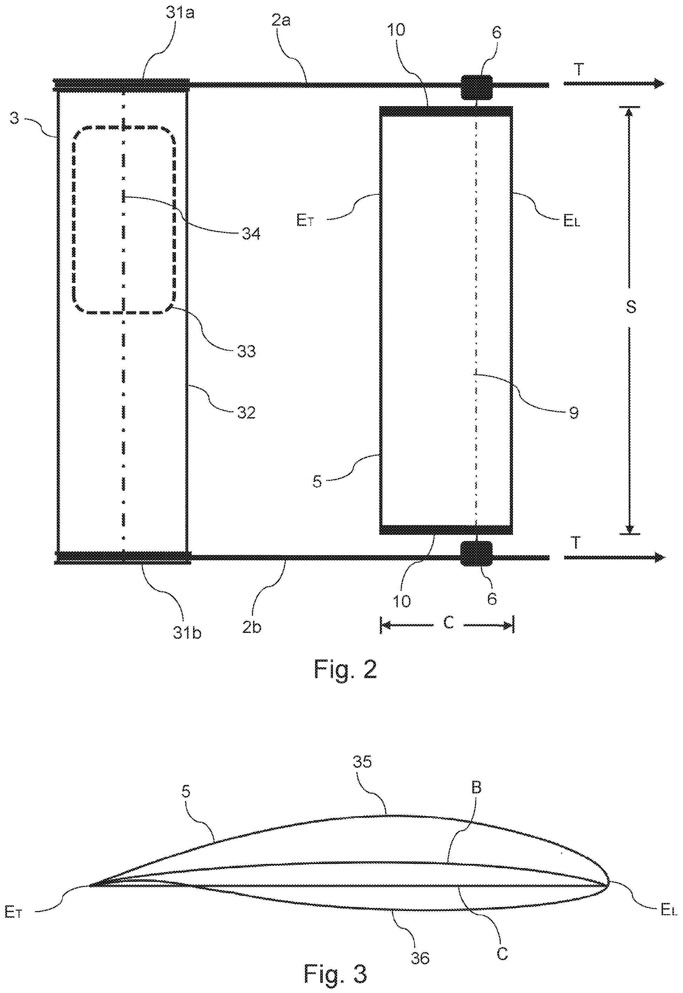

Referring to figures 1 and 2, the underwater power plant 1 comprises in the illustrated embodiment two rotatable stations 3,4, connected by two endless traction members 2a,b, here in the form of upper and lower endless ropes 2a,b. The two rotatable stations 3,4 are configured for rotation in a direction R, indicated in figure 1. The endless traction members 2a,b may as such be drive members configured to transfer a longitudinal movement of the endless traction members 2a,b to the rotatable stations 3,4. In figure 2, only one rotatable station 3 is visible, and in figure 1 only the upper endless traction member 2a is visible.

The upper endless traction member 2a may be rotatably supported by corresponding upper rotatable sheaves 30a, 31a on each rotatable station (upper sheave 31a illustrated in figure 2) and a lower endless traction member 2b may be rotatably supported by corresponding lower rotatable sheaves on each rotatable station (lower sheave 31b illustrated in figure 2). The rotatable sheaves 30a,b, 31a,b may be fixed to the corresponding rotatable stations 3,4 such that when the moving endless traction members 2a,b interacts with the sheaves 30a,b, 31a,b, the sheaves and the rotatable stations 3,4 rotate.

In another embodiment, the sheaves 30a,b, 31a,b may be part of the rotatable stations 3,4. Alternatively, the rotatable sheaves 30a,b, 31a,b may be mechanically coupled to the rotatable stations 3,4, such that when the endless traction members 2a,b interact with the sheaves 30a,b, 31a,b, the sheaves and the rotatable stations 3,4 rotate. The rotation speed of the rotatable stations 3,4 may as such differ from the rotation speed of the rotatable sheaves 30a,b, 31a,b. The invention shall not be limited to this number of endless traction members; systems having fewer or more endless traction members are conceivable. It should be understood that the endless traction members 2a,b may comprise elongated and flexible members such as wires, chains, synthetic fibre ropes, or belts.

At least one of the rotatable stations 3,4 is a generator station for generating electrical energy, in which one or more of the sheaves 30a,b, 31a,b may be connected to an electrical current generator 33 via a generator shaft 34. In the case that only one rotatable station comprises a generator, the other rotatable station is merely a rotatable support for the endless traction members 2a,b.

The generator 33 and generator shaft 34 may be arranged inside a housing 32. Each station 3,4 may be furnished with buoyancy means (not shown) and may be connected to fixed structures by means of synthetic ropes, chains, etc. (not shown), or any other mooring means or support means known in the art of mooring underwater stations. It will be readily understood that movement of the endless traction members 2a,b will cause the sheaves 31a,b, 30a,b and shaft 34 to rotate. This rotational movement is transferred to the generator 33, whereby electrical energy is generated. Such generation of electrical energy is well known in the art and need therefore not be described further.

In the embodiment illustrated in figure 1, the sheaves 30a, 31a (30b, 31b not visible) and endless traction members 2a (2b not visible) rotate counter-clockwise in the direction R. With respect to a water current v_{c}, a first leg between the rotatable stations 3,4 is a downstream leg L_{D} and a second leg between the rotatable stations 3,4 is an upstream leg L_{U}. By virtue of the plant's transverse orientation with respect to the water current v_{c}, in the illustrated embodiment of figure 1, the downstream leg L_{D} is in effect a port beam reach leg and the upstream leg L_{U} is in effect a starboard beam reach leg. It should be noted that the invention shall not be limited to the orientation shown in figure 1.

Asymmetric foils 5 are connected at intervals to the endless traction members 2a,b, each such foil 5 having a span S and a cord line C. The underwater power plant may comprise only one foil 5, but preferably a plurality. A plurality of foils 5 provides a constant movement of the endless traction members 2a,b. Each asymmetric foil 5 may optionally be fitted with winglets 10 at each end. If arranged on two or more endless traction members 2a,b, each foil 5 may be arranged on the endless traction members 2a,b such that the endless traction members 2a,b are displaced in parallel in a direction along the span S of the foil 5.

Referring additionally to figure 3, an asymmetric foil 5 shall for the purpose of this invention be understood as a foil having a leading edge E_{L}, a trailing edge E_{T}, and a distance (camber) greater than zero between a chord line C and a camber mean-line B. When the foils 5 are arranged in a neutral position on the endless traction member 2a,b, the cord line C is generally parallel with a lengthwise direction of the endless traction members 2a,b. The lengthwise direction of the endless traction members 2a,b is coincident with the travelling direction T. The neutral position may occur when the foil 5 is not affected by any external forces or currents. The neutral position may also be the position of the foil 5 when passing the rotatable stations 3,4.

An asymmetric foil 5 is defined by an upper camber side 35 with a different flow profile than a lower camber side 36. The upper camber side 35 is defined as the side of the chord line C where the camber mean-line B is present or the majority of the camber mean-line B is present. In the illustrated embodiment, the upper camber side 35 is more convex than the lower camber side 36. The upper camber side 35 is therefore provided with a low pressure profile, and the lower camber side 36 is provided with a high pressure profile.

In one embodiment, the foil span S may be approximately 10 meters, the chord line C approximately 50 cm, and a maximum camber of approximately of 2% at 40% chord (for example a NACA 2418 airfoil). The invention shall, however, not be limited to such dimensions.

Each foil 5 is preferably stiff. A stiff structure implies that the foils 5 do not comprise any moving parts that alter the general shape of the foils 5. The cross section of the foil 5, e.g. as illustrated in figure 3, is thus permanent, and is not configured to change. The upper and lower camber sides 35,36 are in a stiff, asymmetric foil 5 fixed. A fixed camber side meaning one side of the foil 5 is always the upper camber side 35 (in figure 3 the top side), and the reverse side is always the lower camber side 36 (in figure 3 the bottom side). Even if the direction of the current is changed or even reversed, the top and bottom side of the foil 5 is always the upper and lower camber side, respectively.

The cross section may change e.g. along the span S of the foil 5, but the stiff characteristic provides a constant physical appearance of the foil 5. The asymmetric shape, the dimensions and the shape of the foils 5 are thus constant. Suitable foil materials may be aluminum, resin, PVC and composites, which are all considered stiff materials, but the foils 5 may also be made from e.g. plastic or fabrics swept around a stiff skeleton. It has been found that stiff, asymmetrical foils 5 are much more efficient in use with underwater power plants than symmetrical foils or foils that are not stiff.

The foils 5 are connected to the endless traction members 2a,b such that the upper camber side 35 is facing in a direction generally outwards O of the at least one endless traction member 2a,b, or generally outwards O towards an area or volume defined on an outside of the endless traction members 2a,b. As the endless traction member 2a,b defines a closed loop, and the foils 5 are arranged on the endless traction member 2a,b, the direction outwards O is thus the direction generally out of this closed loop. The lower camber side 36 is facing in a direction generally inwards I of the at least one endless traction member 2a,b, or generally inwards I towards an area or volume defined on an inside of the endless traction members 2a,b. As the endless traction member 2a,b defines a closed loop, and the foils 5 are arranged on the endless traction member 2a,b, the direction inwards I is thus the direction generally into this closed loop. When the foils 5 are in the neutral position, i.e. not affected by a water current v_{c}, the directions outwards O and inwards I are generally perpendicular to the travelling direction T of the endless traction member 2a,b.

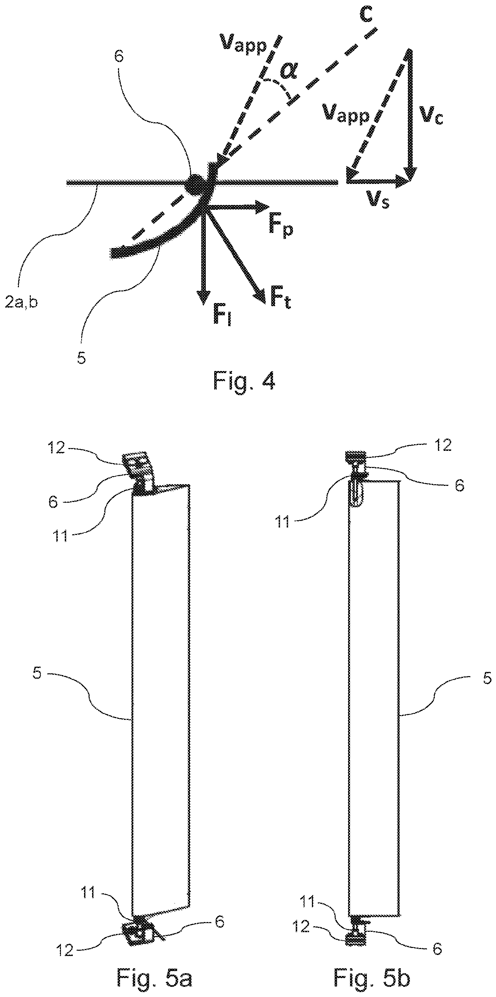

The directions outwards O and inwards I are illustrated in figure 1 where the inwards direction is indicated by three arrows I, and the outwards direction is indicated by three arrows O. The chord line C of the foil 5 is in a neutral position aligned with the travelling direction T of the endless traction members 2a,b. When the foil 5 is impacted by a water current, it is angled relative to the travelling direction T of the endless traction members 2a,b, as is described more in detail with reference to figure 4.

As the lower camber side 36 of the foils 5 is facing inwards I of the underwater power plant 1, the foils 5 on the downstream leg L_{D} are impacted by the current v_{c} to a greater extent than the foils 5 on the upstream leg L_{U}. The lower camber side 36 (the high pressure side) of the foils 5 on the downstream leg L_{D} are facing, and thus impacted by, the current v_{c}, and the upper camber side 35 (the low pressure side) of the foils 5 on the upstream leg L_{U} are facing, and thus impacted by, the current v_{c}. The effect of this is that the downstream leg L_{D} is forced away from the upstream leg L_{U}, preventing crash between the two legs L_{U},L_{D} and providing smooth operation of the power plant 1. If the current v_{c} increases in strength, the effect of the downstream leg L_{D} pulling away from the upstream leg L_{U} is even more prominent.

Each foil 5 may comprise a connection member 9 for connecting the foil 5 to the endless traction members 2a,b. The connection member 9 may be a shaft, a pin or similar member configured for connecting a foil 5 to an endless traction member 2a,b. The connection member 9 allows the foil 5 to rotate relative to the endless traction members 2a,b about the connection member 9. The connection member 9, or an imaginary line between two connection members 9 arranged at the upper and lower ends of the foil 5, may be positioned such that the area of the foil 5 between the connection member 9 and the trailing edge E_{T} is larger, or configured to be greater impacted by the current v_{c}, than the area between the connection member 9 and the leading edge E_{L}. The foil 5 may as such be configured to maintain its direction relative to the current v_{c}.

The connection member 9 may be fixed to the foil 5 and rotatably connected to respective connection devices 6. The upper and lower connection devices 6 are connected to respective upper and lower endless traction members 2a,b (see figure 2). Figure 2 illustrates that the connection member 9, in the form of a shaft, extends through the foil span S, parallel with the foil span S, but the connection member 9 may comprise other rotatable connection means such as individual bolts or pegs.

In figure 1, the underwater power plant 1 is shown arranged in water, transversely to a current v_{c}. Referring additionally to figure 4, v_{c} denotes the true water velocity, vₐₚₚ is the apparent water velocity, vₛ is the velocity of the foil (and endless traction member), and α is the angle of attack (AoA). The total force Fₜ is the sum of the lateral force, Fₗ, and the propulsive force, Fₚ; the latter acting along the endless traction member 2a,b. In use, therefore, the true water velocity, vₐₚₚ, cause the asymmetric foil to generate the propulsive force, Fₚ; which causes the endless traction members to move in the travelling direction T, and cause the sheaves to rotate in the direction R.

The underwater power plant 1 is configured for rotation in one direction R. The illustrated embodiment of figure 1 shows an underwater power plant 1 where the endless traction member 2a is configured for rotation in a direction R against the clock, because of the orientation of the foils 5 on the endless traction members 2a,b. In another embodiment, an underwater power plant may be configured for rotation in a direction with the clock, provided the foils are arranged reversely on the endless traction members.

As indicated in figure 1, each foil 5 has a free lateral travel sector β₁, β₂ to either side of the endless traction members 2a,b to which the connection member 9 is connected. This restriction may be defined by a damper element 11 (e.g. spring constant) or other abutment members. In one embodiment, β₁ = β₂ = 10°. In another embodiment, β₁ ≠ β₂. When the foil 5 is in the neutral position β₁ = β₂ = 0°. Also as indicated in figure 1, the upper camber side 35 is facing in an outwards direction O when the foil 5 is positioned anywhere within in the lateral travel sector β₁, β₂. Correspondingly, the lower camber side 36 is facing in an inwards direction I when the foil 5 is positioned anywhere within in the lateral travel sector β₁, β₂.

Referring to figures 5a and 5b, each foil 5 may comprise a connection device 6. In the illustrated embodiment, the foil 5 is connected to two endless traction members, and comprises as such two connection devices 6, an upper connection device 6 and a lower connection device 6. Each connection device 6 is fixedly connected to its respective endless traction member by means of e.g. a clamp 12 or similar fixture. The connection device 6 may comprise a receptacle for the rotatable connection member (illustrated in figure 2) such that the foil 5 may rotate about the connection member, as described with reference to figure 2. The damper element 11, such as a torsion spring or a coil spring, may restrict rotation of the connection member 9 in the connection device 6 and restore the connection member 9 (and the asymmetric foil 5) to an equilibrium position. The damper element 11 is arranged to restrict the rotation of the foil 5 about an axis parallel with the span S (illustrated in figure 2). The damper element 11 may be replaceable and/or adjustable. It should be understood that a similar restriction and restoring device may be embedded in the foil 5.

The clockwise travelling foils 5 of the illustrated embodiment may lean towards their respective damper elements 11 on both upstream (asymmetric/port beam reach leg) and downstream legs (symmetric/starboard beam reach leg) independent of current direction, allowing the upper camber side to face outwards, and facilitating passing of the foil around the rotatable stations throughout their loop travel. The foil's high angle of attack may be maintained until the water current speed v_{c3} exceeds a predetermined threshold of e.g. 1.5 m/s, at which point the damper elements 11 may start compressing aand thus reducing the angle of attack in tune with increase in water current speed. An important peak shaving is thus facilitated in order not to compromise the structural integrity of the plant.

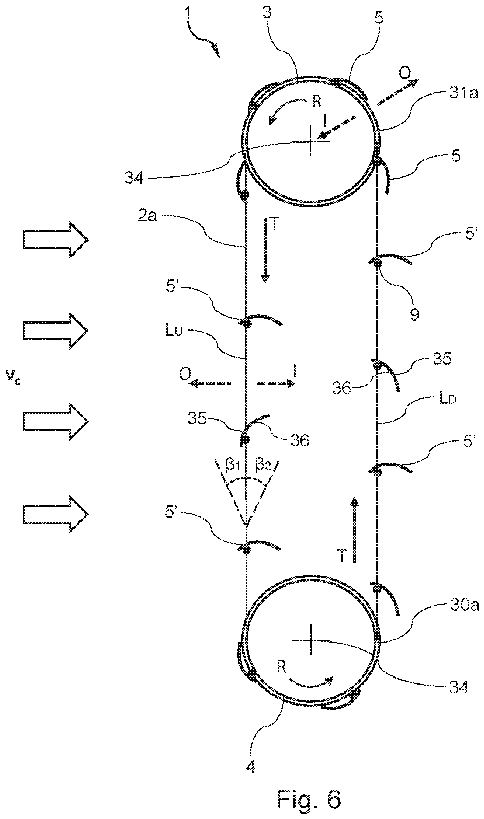

Figure 6 shows the underwater power plant 1 where some foils 5' have been released such that they are free to rotate about the connection member 9 relative to the endless traction members 2a,b. The camber lines C (not illustrated in figure 6, see figure 3) of the foils 5' may thus be aligned, or generally aligned, with the water current v_{c} or the apparent water velocity vₐₚₚ (as described with reference to figure 4), such that the released foils 5' may not contribute to move the endless traction members 2a,b in the travelling direction T. Such releasing of the foils 5 is advantageous if the allowed travel of the foils 5 at the maximum allowed travel β₁, β₂ to either side is not enough to limit the speed of the endless traction members 2a,b. Releasing the foils 5 may be necessary to prevent excess overload on the power plant 1 if the speed of the water current v_{c}, is too high, and e.g. exceeds a threshold.

In figure 6, every second foil along the downstream leg L_{U} and the upstream leg L_{D} is released. Any number of released foils 5' is possible, and e.g. every third foil 5 on the upstream leg L_{D} could in one example be released, while e.g. all or none of the foils 5 on the downstream leg L_{U} could be released. By releasing more foils 5' on the upstream leg L_{U} than the downstream leg L_{D}, the power plant 1 can be manipulated such that the downstream leg L_{D} is more impacted by the water current v_{c} and thus pulls away from the upstream leg L_{U}.

The foils 5 may be released and connected at the rotatable stations 3,4, such that the number of released foils 5' may be continuously adjusted, and the number of released foils 5' may be continuously adapted to the strength of the water current v_{c}. Every foil 5 may as such be configured to be released. A connecting mechanism at the rotatable station 3 may e.g. disconnect the damper element 11, such that the released foil 5' may rotate freely about the connection member 9. When the released foil 5' has travelled to the next rotatable station 4, a corresponding connecting mechanism at the rotatable station 4 may connect the damper element 11, such that the foil 5 again is limited to move within the travel sector β₁, β₂. The connecting mechanism may be automatically operated, such that releasing and connecting foils 5' may be automatic and based on e.g. the water current speed v_{c}. the power output of the generator 33 (not shown in figure 6), or similar input.

The invention shall not be limited to the number of foils. An embodiment of the invented system may comprise any number of foils ranging from one foil to a plurality of foils.

The person skilled in the art realizes that the present invention is not limited to the preferred embodiments described above. The person skilled in the art further realizes that modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. An underwater power plant (1) for arrangement in a water current (v_{c}), the underwater power plant (1) comprising:
- at least two rotatable stations (3,4);
- at least one endless traction member (2a,2b) connected to the rotatable stations (3,4);
- the at least one endless traction member (2a,2b) configured to rotate the at least two rotatable stations (3,4) as the endless traction member (2a; 2b) moves in its lengthwise direction (T);
- at least one asymmetric foil (5) connected to the at least one endless traction member (2a,2b) and comprising an upper camber side (35) and lower camber side (36);
- the at least one asymmetric foil (5) is configured to move the endless traction member (2a,2b) in its lengthwise direction (T) as the water current (v_{c}) impacts the at least one asymmetric foil (5);
- the upper camber side (35) of the at least one asymmetric foil (5) is facing in a direction outwards (O) of the at least one endless traction member (2a,b) and the lower camber side (36) of the at least one asymmetric foil (5) is facing in a direction inwards (I) of the at least one endless traction member (2a,b);
- the power plant is oriented so as to define a downstream leg (L_{D}) and an upstream leg (L_{U}) with respect to the water current (v_{c}) for the at least one traction member (2a,2b); and
- the lower camber side (36) of the at least one asymmetric foil (5) on the downstream leg (L_{D}) is facing the water current (v_{c}), and the upper camber side (35) of the at least one asymmetric foil (5) on the upstream leg (L_{U}) is facing the water current (v_{c}).

2. The underwater power plant (1) of claim 1, where the upper camber side (35) has a low pressure profile, and the lower camber side (36) has a high pressure profile.

3. The underwater power plant (1) of any one of the previous claims, where the at least one asymmetric foil (5) is stiff.

4. The underwater power plant (1) of any one of the previous claims, where the endless traction member (2a,2b) comprises a rope or other elongated and flexible member, such as a wire, chain or belt.

5. The underwater power plant (1) of any one of the previous claims, where the endless traction member (2a,2b) is rotatably supported by rotatable sheaves (30a,b, 31a,b) connected to the rotatable stations (3,4).

6. The underwater power plant (1) of any one of the previous claims, where at least one rotatable station (3;4) comprises a generator (33) and rotatable transmission means (31a,b, 34) whereby the generator (33) may generate electrical energy when the endless traction member (2a,2b) is moving.

7. The underwater power plant (1) of any one of the previous claims, further comprising a connection device (6) for rotatably connecting the at least one asymmetric foil (5) to the at least one endless traction member (2a,2b).

8. The underwater power plant (1) of claim 7, where the foil (5) further comprises a connection member (9) for connecting the foil (5) to the connection device (6).

9. The underwater power plant (1) of claim 7 or 8, where a damper element (11) is arranged to restrict rotation of the foil (5) about an axis parallel with the span (S) of the foil (5).

10. The underwater power plant (1) of claim 9, where the damper element (11) is a spring (11).

11. The underwater power plant (1) of any one of claims 9-10, where rotation of the foil (5) is restricted by a free lateral travel sector (β1, β2) to either side of the endless traction member (2a,2b).

12. The underwater power plant (1) of any one of the previous claims 9-11, where the at least one foil (5) is configured to be released from the damper element (11) at a first rotatable station (3) thereby allowing the at least one foil (5) to freely rotate about the connection member (9).

13. The underwater power plant (1) of claim 12, where the at least one foil (5) is configured to be connected to the damper element (11) at a second rotatable station (4).

## Patentansprüche

1. Unterwasserkraftwerk (1) zur Anordnung in einer Wasserströmung (v_{c}), wobei das Unterwasserkraftwerk (1) Folgendes umfasst:
- mindestens zwei drehbare Stationen (3,4);
- mindestens ein Endloszugelement (2a,2b), das mit den drehbaren Stationen (3,4) verbunden ist;
- wobei das mindestens eine Endloszugelement (2a,2b) dazu konfiguriert ist, die mindestens zwei drehbaren Stationen (3,4) zu drehen, wenn sich das Endloszugelement (2a;2b) in seiner Längsrichtung (T) bewegt;
- mindestens einen asymmetrischen Flügel (5), der mit dem mindestens einen Endloszugelement (2a,2b) verbunden ist und eine obere Wölbungsseite (35) und eine untere Wölbungsseite (36) umfasst;
- der mindestens eine asymmetrische Flügel (5) ist dazu konfiguriert, das Endloszugelement (2a,2b) in seiner Längsrichtung (T) zu bewegen, wenn die Wasserströmung (v_{c}) auf den mindestens einen asymmetrischen Flügel (5) einwirkt;
- die obere Wölbungsseite (35) des mindestens einen asymmetrischen Flügels (5) weist in eine Richtung nach außen (O) von dem mindestens einen Endloszugelement (2a,b) und die untere Wölbungsseite (36) des mindestens einen asymmetrischen Flügels (5) weist in eine Richtung nach innen (I) von dem mindestens einen Endloszugelement (2a,b);
- das Kraftwerk ist so ausgerichtet, dass es einen stromabwärts gelegenen Schenkel (L_{D}) und einen stromaufwärts gelegenen Schenkel (L_{U}) in Bezug auf die Wasserströmung (v_{c}) für das mindestens eine Zugelement (2a,2b) definiert; und
- die untere Wölbungsseite (36) des mindestens einen asymmetrischen Flügels (5) an dem stromabwärts gelegenen Schenkel (L_{D}) weist zu der Wasserströmung (v_{c}) und die obere Wölbungsseite (35) des mindestens einen asymmetrischen Flügels (5) an dem stromaufwärts gelegenen Schenkel (L_{U}) weist zu der Wasserströmung (v_{c}).

2. Unterwasserkraftwerk (1) nach Anspruch 1, wobei die obere Wölbungsseite (35) ein Niederdruckprofil aufweist und die untere Wölbungsseite (36) ein Hochdruckprofil aufweist.

3. Unterwasserkraftwerk (1) nach einem der vorhergehenden Ansprüche, wobei der mindestens eine asymmetrische Flügel (5) steif ist.

4. Unterwasserkraftwerk (1) nach einem der vorhergehenden Ansprüche, wobei das Endloszugelement (2a,2b) ein Seil oder ein anderes längliches und flexibles Element wie etwa einen Draht, eine Kette oder einen Riemen umfasst.

5. Unterwasserkraftwerk (1) nach einem der vorhergehenden Ansprüche, wobei das Endloszugelement (2a,2b) drehbar durch drehbare Seilscheiben (30a,b, 31a,b) gestützt ist, die mit den drehbaren Stationen (3,4) verbunden sind.

6. Unterwasserkraftwerk (1) nach einem der vorhergehenden Ansprüche, wobei mindestens eine drehbare Station (3;4) einen Generator (33) und drehbare Übertragungsmittel (31a,b, 34) umfasst, wodurch der Generator (33) elektrische Energie erzeugen kann, wenn sich das Endloszugelement (2a,2b) bewegt.

7. Unterwasserkraftwerk (1) nach einem der vorhergehenden Ansprüche, ferner umfassend eine Verbindungsvorrichtung (6) zum drehbaren Verbinden des mindestens einen asymmetrischen Flügels (5) mit dem mindestens einen Endloszugelement (2a,2b).

8. Unterwasserkraftwerk (1) nach Anspruch 7, wobei der Flügel (5) ferner ein Verbindungselement (9) zum Verbinden des Flügels (5) mit der Verbindungsvorrichtung (6) umfasst.

9. Unterwasserkraftwerk (1) nach Anspruch 7 oder 8, wobei ein Dämpferelement (11) dazu angeordnet ist, Drehung des Flügels (5) um eine Achse parallel zu der Spannweite (S) des Flügels (5) einzuschränken.

10. Unterwasserkraftwerk (1) nach Anspruch 9, wobei das Dämpferelement (11) eine Feder (11) ist.

11. Unterwasserkraftwerk (1) nach einem der Ansprüche 9-10, wobei Drehung des Flügels (5) durch einen freien seitlichen Bewegungssektor (β1, β2) auf beiden Seiten des Endloszugelements (2a,2b) eingeschränkt ist.

12. Unterwasserkraftwerk (1) nach einem der vorhergehenden Ansprüche 9-11, wobei der mindestens eine Flügel (5) dazu konfiguriert ist, an einer ersten drehbaren Station (3) von dem Dämpferelement (11) gelöst zu werden, wodurch zugelassen wird, dass sich der mindestens eine Flügel (5) frei um das Verbindungselement (9) dreht.

13. Unterwasserkraftwerk (1) nach Anspruch 12, wobei der mindestens eine Flügel (5) dazu konfiguriert ist, an einer zweiten drehbaren Station (4) mit dem Dämpferelement (11) verbunden zu werden.

## Revendications

1. Centrale électrique sous-marine (1) destinée à être agencée dans un courant d'eau (v_{c}), la centrale électrique sous-marine (1) comprenant :
- au moins deux stations rotatives (3, 4) ;
- au moins un élément de traction sans fin (2a,2b) relié aux stations rotatives (3, 4) ;
- l'au moins un élément de traction sans fin (2a,2b) conçu pour faire tourner les au moins deux stations rotatives (3, 4) tandis que l'élément de traction sans fin (2a ; 2b) se déplace dans sa direction longitudinale (T) ;
- au moins une feuille asymétrique (5) reliée à l'au moins un élément de traction sans fin (2a,2b) et comprenant un côté de cambrure supérieur (35) et un côté de cambrure inférieur (36) ;
- l'au moins une feuille asymétrique (5) est conçue pour déplacer l'élément de traction sans fin (2a,2b) dans sa direction longitudinale (T) tandis que le courant d'eau (v_{c}) impacte l'au moins une feuille asymétrique (5) ;
- le côté de cambrure supérieur (35) de l'au moins une feuille asymétrique (5) est orienté dans une direction vers l'extérieur
(O) de l'au moins un élément de traction sans fin (2a,b) et le côté de cambrure inférieur (36) de l'au moins une feuille asymétrique (5) est orienté dans une direction vers l'intérieur (I) de l'au moins un élément de traction sans fin (2a,b) ;
- la centrale électrique est orientée de façon à définir un parcours en aval (L_{D}) et un parcours en amont (L_{U}) par rapport au courant d'eau (v_{c}) pour l'au moins un élément de traction (2a,2b) ; et
- le côté de cambrure inférieur (36) de l'au moins une feuille asymétrique (5) sur le parcours en aval (L_{D}) fait face au courant d'eau (v_{c}), et le côté de cambrure supérieur (35) de l'au moins une feuille asymétrique (5) sur le parcours en amont (L_{U}) fait face au courant d'eau (v_{c}).

2. Centrale électrique sous-marine (1) de la revendication 1, où le côté de cambrure supérieur (35) possède un profil de basse pression, et le côté de cambrure inférieur (36) possède un profil de haute pression.

3. Centrale électrique sous-marine (1) de l'une quelconque des revendications précédentes, où l'au moins une feuille asymétrique (5) est rigide.

4. Centrale électrique sous-marine (1) de l'une quelconque des revendications précédentes, où l'élément de traction sans fin (2a,2b) comprend un câble ou un autre élément allongé et souple, tel qu'un fil métallique, une chaîne ou une courroie.

5. Centrale électrique sous-marine (1) de l'une quelconque des revendications précédentes, où l'élément de traction sans fin (2a,2b) est supporté de manière rotative par des poulies rotatives (30a,b, 31a,b) reliées aux stations rotatives (3, 4).

6. Centrale électrique sous-marine (1) de l'une quelconque des revendications précédentes, où au moins une station rotative (3 ; 4) comprend un générateur (33) et des moyens de transmission rotatifs (31a,b, 34) grâce auxquels le générateur (33) peut générer de l'énergie électrique lorsque l'élément de traction sans fin (2a,2b) se déplace.

7. Centrale électrique sous-marine (1) de l'une quelconque des revendications précédentes, comprenant en outre un dispositif de liaison (6) pour relier de manière rotative l'au moins une feuille asymétrique (5) à l'au moins un élément de traction sans fin (2a,2b).

8. Centrale électrique sous-marine (1) de la revendication 7, où la feuille (5) comprend en outre un élément de liaison (9) pour relier la feuille (5) au dispositif de liaison (6).

9. Centrale électrique sous-marine (1) de la revendication 7 ou 8, où un élément amortisseur (11) est agencé pour limiter la rotation de la feuille (5) autour d'un axe parallèle à l'envergure (S) de la feuille (5).

10. Centrale électrique sous-marine (1) de la revendication 9, où l'élément amortisseur (11) est un ressort (11).

11. Centrale électrique sous-marine (1) de l'une quelconque des revendications 9-10, où la rotation de la feuille (5) est limitée par un secteur de déplacement latéral libre (β1, β2) de chaque côté de l'élément de traction sans fin (2a,2b).

12. Centrale électrique sous-marine (1) de l'une quelconque des revendications précédentes 9-11,
où l'au moins une feuille (5) est conçue pour être libérée de l'élément amortisseur (11) au niveau d'une première station rotative (3), permettant ainsi à l'au moins une feuille (5) de tourner librement autour de l'élément de liaison (9).

13. Centrale électrique sous-marine (1) de la revendication 12, où l'au moins une feuille (5) est conçue pour être reliée à l'élément amortisseur (11) au niveau d'une seconde station rotative (4).
